# EUROPÄISCHE PATENTSCHRIFT

(11) **EP 2 628 684 B1**
(45) Veröffentlichungstag und Bekanntmachung des Hinweises auf die Patenterteilung: **07.01.2015**
(21) Anmeldenummer: 13155338.0
(22) Anmeldetag: 15.02.2013
(51) Int. Cl.: B65B 35/40, B65B 35/44, B65G 47/08, B65B 5/06, B65G 17/32

(54) **Vorrichtung zum Transport von nicht frei stapelfähigen Verpackungen, insbesondere von Stickpacks, zu einem Transportbehälter**
Apparatus for transporting packages which cannot be freely stacked, in particular stick packs, to a transport container
Dispositif de transport d'emballages non gerbables librement, en particulier de stickpacks, vers un récipient de transport

(30) Priorität: 15.02.2012 DE 102012101221
(43) Veröffentlichungstag der Anmeldung: 21.08.2013
(60) Teilanmeldung: 14160640.0
(73) Patentinhaber: MediSeal GmbH, 33758 Schloss Holte-Stukenbrock (DE)
(72) Erfinder: Sassenberg, Dirk, 33415 Verl (DE); Pasuch, Michael, 32107 Bad Salzuflen (DE); Plewa, Stephan, 33758 Schloss Holte-Stukenbrock (DE); Balsfulland, Markus, 33689 Bielefeld (DE); Biehl, Johann, 33758 Schloß Holte-Stukenbrock (DE); Deimel, Markus, 36093 Künzell (DE); Leineke, Ulf, 33102 Paderborn (DE); Lücke, Joachim, 33689 Bielefeld (DE); Nielebock, Jan-Karl, 32107 Bad Salzuflen (DE); Ringel, Hartmut, 33813 Oerlingshausen (DE)
(74) Vertreter: Stork Bamberger

(56) Entgegenhaltungen:
- EP-A1- 1 216 937
- EP-A1- 2 055 637
- JP-U- S6 299 504

## Beschreibung

Die vorliegende Erfindung betrifft eine Vorrichtung zum Transport von nicht frei stapelfähigen Verpackungen, insbesondere von Stickpacks, von einer Verpackungsherstellungsvorrichtung zu einem Transportbehälter in einer Transportverpackstation unter gleichzeitiger verdichtender Anordnung der Verpackungen, wobei die Verpackungen von einer Verpackungsherstellungsvorrichtung hergestellt werden, die mindestens zwei Fallkanäle aufweist, die gleichmäßig oder im wesentlichen gleichmäßig voneinander durch einen Mittenabstand P beabstandet sind, wobei die Vorrichtung ein erstes Transportelement mit mindestens einer Fächergruppe zur Aufnahme der von der Verpackungsherstellungsvorrichtung abgegebenen Verpackungen und zum Transport der Verpackungen in Richtung einer Transportverpackstation; eine Übergabeeinheit zur Übergabe der Verpackungen aus der Verpackungsherstellungsvorrichtung an die mindestens eine Fächergruppe des ersten Transportelements und zur Stapelbildung in der Fächergruppe sowie ein zweites Transportelement mit mindestens einer Fächergruppe zum Transport der Verpackungen zu der Transportverpackstation umfasst, wobei die Fächer der Fächergruppen des ersten und des zweiten Transportelements jeweils eine Breite gleich oder im wesentlichen gleich der Breite der Verpackungen aufweisen.

Die Erfindung betrifft ferner ein Verfahren zum Transportieren von nicht frei stapelfähigen Verpackungen von einer Verpackungsherstellungsvorrichtung, die mindestens zwei Fallkanäle aufweist, die gleichmäßig oder im wesentlichen gleichmäßig voneinander durch einen Mittenabstand P beabstandet sind, zu einem Transportbehälter in einer Transportverpackungsstation unter verdichtender Anordnung der Verpackungen.

Eine nicht frei stapelfähige Verpackung im Sinne der Erfindung ist jede Art von Verpackung, die nicht ohne Hilfsmittel mit weiteren gleichen Verpackungen einen Stapel bilden kann. Derartige Verpackungen sind insbesondere verformbare Verpackungen, d.h. solche, die keine formstabile Oberfläche aufweisen. Eine derartige verformbare Verpackung kann sich an ihren Inhalt anpassen oder sich abhängig von der Form oder Lage des Inhalts verändern. Beispiele für derartige Verpackungen sind Stickpacks, Beutel wie z.B. Teebeutel, Säcke, Schläuche oder Netze. Als Füllgut kommen dabei insbesondere Flüssigkeiten, gelartige Produkte, Schüttgut wie Pellets, Granulate oder Pulver und Stückgüter wie Bonbons oder Kapseln in Frage. Nicht stapelfähige Verpackungen sind ferner solche, die aufgrund ihrer Form nicht frei stapelbar sind, wie z.B. Kugeln oder Kreiszylinder, wenn die Stapel durch Aufeinanderlegen an den Mantelflächen gebildet werden. Ohne Hilfsmittel verrutschen die einzelnen Verpackungen beim Stapelbilden und bleiben nicht in der gewünschten Übereinanderanordnung. Verformbare Verpackungen gehören in jedem Fall zu den nicht frei stapelbaren Verpackungen im Sinne der Erfindung, auch wenn in einigen Fällen ein Stapel aus wenigen Verpackungen gerade noch ohne Hilfsmittel stabil sein mag.

Die Vorrichtung der vorliegenden Erfindung dient dazu, solche nicht frei stapelfähigen Verpackungen von einer Verpackungsherstellungsvorrichtung, die derartige Verpackungen produziert, zu einem Transportbehälter in einer Transportverpackstation zu transportieren, in dem mehrere dieser Verpackungen für den Transport oder zu sonstigen Zwecken wie zum Beispiel zu einer Verkaufseinheit oder in einer Umverpackung zusammengefasst werden, wobei die Verpackungen während des Transports von der Verpackungsherstellungsvorrichtung zu der Transportverpackstation verdichtet werden. Derartige Transportbehälter können beispielsweise Kartons, Kästen, Boxen oder Container sein.

Die Verpackungsherstellung umfasst im Sinne der Erfindung nicht nur die Herstellung der Verpackung sondern auch deren Befüllung mit dem zu verpackenden Gut.

Eine Verdichtung der Verpackungen bedeutet die Verringerung des Abstandes von Verpackungsstapeln im Transportprozess zueinander. Der Abstand fertig verpackter Produkte beim Verlassen der Verpackungsherstellungsvorrichtung ist von dieser Vorrichtung abhängig. Dieser Abstand kann jedoch ein größerer sein, als für den weiteren Verpackungsprozess, insbesondere die weitere Verpackung in einen Transportbehälter, gewünscht. Dies sei anhand des Beispiels von Stickpacks näher erläutert:
Die Stickpackherstellung erfolgt vertikal, d.h. der Transport der produzierten Verpackungen innerhalb der Verpackungsherstellungsvorrichtung erfolgt aufgrund von Schwerkraft, und zwar innerhalb mehrerer parallel angeordneter Kanäle. Diese Kanäle weisen einen seitlichen Abstand, gemessen von der Mitte eines Kanals bis zur Mitte des benachbarten Kanals, im folgenden "Mittenabstand" P auf. Im Falle von Stickpacks ist, bedingt durch die Herstellung der Stickpacks, der Abstand zweier Stickpacks beim Verlassen der Verpackungsherstellungsmaschine ungefähr doppelt so groß wie die Breite eines Stickpacks. Beim Verlassen der Verpackungsherstellungsmaschine werden Stickpacks aus den parallelen Kanälen zur gleichen Zeit von einer Übergabeeinheit aufgenommen und in horizontaler Ausrichtung in Fächer einer Fächergruppe eines ersten Transportelements gelegt. Die Anzahl der befüllten Fächer entspricht der Anzahl der Fallkanäle. Diese Fächer, die eine Breite ungefähr gleich der Breite der Stickpacks aufweisen, weisen wie die Fallkanäle einen Mittenabstand, d.h. einen Abstand von der Mitte eines Faches bis zur Mitte des benachbarten Faches, X = P auf. Dieser Vorgang wird wiederholt, bis in den Fächern Stapel mit der gewünschten Anzahl Stickpacks gebildet sind. Die Fächergruppe wird weitertransportiert zu einer weiteren Übergabeeinheit, die die Stickpacks in einen Karton verbringt. Während die Stickpacks in den Fächern aufgrund der Breite dieser Fächer, die ungefähr gleich der Breite der Stickpacks ist, geordnete Stapel bilden, ergibt sich beim weiteren Verpacken der Stickpacks in Transportbehälter das Problem, dass die Stickpacks aufgrund des Abstandes der einzelnen Stickpackstapel zueinander beim Verbringen in einen Transportbehälter verrutschen und nicht in Stapeln verbleiben. Es ist daher eine Anordnung gewünscht, die ermöglicht, dass die Stapel als solche erhalten bleiben und nicht verrutschen.

Die EP 2 055 637 A1 schlägt dazu vor, zum Transport von Stickpacks von einer Ladestation an der Herstellungsmaschine zu einer Kartonfüllstation eine Vorrichtung zu verwenden, die eine Ringförderbahn, Antriebselemente, sowie erste und zweite Betriebsmittel umfasst. Die Ringförderbahn weist dabei wenigstens zwei Gruppen von Fächern auf, deren Anzahl ein Vielfaches der Anzahl der Fallkanäle ist, deren Mittenabstand P/2 beträgt und die als Fächersegmente auf Riemen ausgebildet sind. Die Antriebselemente treiben die einzelnen Gruppen von Fächern unabhängig an und positionieren die Fächergruppen alternierend zuerst an einer Ladestation und nachfolgend an einer Kartonfüllstation. Die ersten Betriebsmittel sammeln an der Ladestation Stickpacks, legen sie zunächst in jedem 2. Fach einer ersten Fächergruppe, die auf einem ersten Transportband ausgebildet ist, ab und bilden so Stapel. Wenn die gewünschte Stapelhöhe erreicht ist, verfährt die erste Fächergruppe in Transportrichtung um einen Abstand P/2, woraufhin die jeweils zweiten, bis dahin noch leeren Fächer gefüllt werden können. Die so gefüllte Fächergruppe wird dann von dem Antriebselement zu einer Kartonfüllstation verfahren, wo zweite Betriebsmittel die Stapel aus den Fächern in einen Karton hinüber schieben. Während die erste Fächergruppe zur Kartonfüllstation verfährt, wird eine zweite Fächergruppe, die sich auf einem zweiten Transportband befindet, das parallel neben dem ersten Transportband läuft, zu der Ladestation verfahren und dort von den ersten Betriebsmitteln befüllt, wie für die erste Fächergruppe beschrieben.

Bei der Lösung gemäß der EP 2 055 637 A1 findet somit eine Verdichtung direkt in der Ladestation durch Verfahren der Fächergruppe in Transportrichtung statt. Zwei unabhängig angetriebene und nebeneinander laufende Fächergruppen auf zwei Transportbändern sorgen dafür, dass, wenn eine Fächergruppe am Kartonierer entladen wird, eine weitere an der Ladestation beladen werden kann.

Diese Lösung ist starr und unflexibel. Will man die Kapazitäten von Ladestation und Kartonierer besser nutzen und z.B. eine dritte und vierte Fächergruppe einsetzen, die beladen werden, während die erste bzw. die zweite Fächergruppe gerade von der Ladestation zum Kartonierer verfahren wird, ist es erforderlich, ein drittes und viertes Transportband parallel neben den beiden ersten Transportbändern anzuordnen. Dadurch wird die Vorrichtung ausladend. Ferner müssen die Betriebsmittel eine hohe Verfahrbarkeit aufweisen, um an den unterschiedlichen Bändern ein Befüllen bzw. Entleeren der Fächergruppen zu ermöglichen. Die Anordnungsmöglichkeiten für Stickpackmaschine mit Ladestation und Kartonierer sind stark beschränkt. Da das Transportband die beiden Einrichtungen miteinander verbindet, ist nur eine Anordnung in Reihe möglich. Dadurch dass die Transportbänder als Riemen mit Fächersegmenten ausgebildet sind, ist die Vorrichtung darüber hinaus nicht ohne größere Umbaumaßnahmen für andere Produkte zu verwenden, die eine andere Fächergröße erfordern, da jeweils das gesamte Transportband ausgetauscht werden muss.

Aufgabe der vorliegenden Erfindung ist es daher, eine Transportvorrichtung sowie ein Transportverfahren zur Verfügung zu stellen, die die Kapazitäten von Ladevorrichtung und Kartonierer besser nutzen können, die eine flexible Anordnung der Einrichtungen zueinander ermöglichen und die flexibel für unterschiedliche Verpackungen einsetzbar sind.

Gemäß der vorliegenden Erfindung wird diese Aufgabe zum einen mit einer Vorrichtung der eingangs genannten Art dadurch gelöst, dass die Fächergruppe des ersten Transportelements mindestens f Fächer aufweist und f der Anzahl F der Fallkanäle oder einem Vielfachen davon entspricht, der Mittenabstand X der Fächer des ersten Transportelements dem Mittenabstand P der Fallkanäle entspricht (X = P) oder im Wesentlichen entspricht, der Mittenabstand Y der Fächer des zweiten Transportelements dem halben Mittenabstand P der Fallkanäle entspricht (Y = P/2) oder im Wesentlichen entspricht und die Vorrichtung des Weiteren eine zweite Übergabeeinheit zur Übergabe der Verpackungen vom ersten Transportelement an das zweite Transportelement umfasst, wobei der Vorrichtung ein Positioniermittel zur Positionierung der Fächergruppe des ersten Transportelements relativ zur Fächergruppe zugeordnet ist.

Durch die Erfindung wird der Ladevorgang an der Verpackungsherstellungsvorrichtung vollständig von dem Ladevorgang an dem Transportbehälter abgekoppelt. An der Verpackungsherstellungsvorrichtung selbst ist kein Verfahren des Transportelements erforderlich. Die Fächergruppe wird gefüllt und dann weiter transportiert. Die erste Übergabeeinrichtung kann daher sehr einfach ausgebildet sein, und sie braucht nicht verfahrbar zu sein. Durch die Verwendung zweier unterschiedlicher Transportelemente für den Transport von der Verpackungsherstellungsvorrichtung weg und zum Transportbehälter in der Transportverpackungsstation hin, können beliebig viele Fächergruppen an der Verpackungsherstellungsvorrichtung beladen werden, ohne dass dafür entsprechend zusätzliche Transportbänder bereit gestellt werden müssten. Vielmehr sind zwei Transportbänder ausreichend. Durch die Entkopplung der Beladung an der Verpackungsherstellungsvorrichtung von dem Einschub in den Transportbehälter sind auch kleine Stapelhöhen bei hohen Taktzahlen und damit einhergehend eine höhere Leistung der Transportverpackstation möglich. Außerdem ist eine Aufstellung der beiden Transportbänder in einem Winkel <> 180° möglich, was eine größere Flexibilität in der räumlichen Anordnung von Verpackungsherstellungsvorrichtung und der Transportverpackungsstation zum Befüllen der Transportbehälter bedeutet.

Die Verdichtung der Verpackungsstapel erfolgt bei der vorliegenden Erfindung quer zur Transportrichtung.

Die Anzahl F der Fallkanäle kann insbesondere F = 2, 4,6,8, 10, 12, 14 oder 16 betragen, wobei F = 10 besonders bevorzugt ist. Entsprechend beträgt auch die Anzahl der Fächer f der Fächergruppe des ersten Transportelements f = F = 2, 4, 6, 8, 10, 12, 14 oder 16. Es können zu den f Fächern noch zusätzliche Fächer vorgesehen sein. Zumeist wird die Anzahl jedoch derjenigen der Fallkanäle entsprechen.

Weist die Fächergruppe des zweiten Transportelements ebenfalls f Fächer auf, so werden in der Fächergruppe des zweiten Transportelements die Stapel von einer Fächergruppe des ersten Transportelements aufgenommen. Dies erfolgt in der Weise, dass zunächst die erste Hälfte der Fächer des ersten Transportelements mit den Fächern der Fächergruppe des zweiten Transportelements ausgerichtet und so jedes zweite Fach der Fächergruppe des zweiten Transportelements gefüllt wird. Ist in jedem zweiten Fach der Fächergruppe des zweiten Transportelements ein Stapel der gewünschten Anzahl Verpackungen gebildet, verfährt die Fächergruppe des ersten Transportelements derart, dass nun die zweite Hälfte der Fächer des ersten Transportelements mit den noch leeren jeweils zweiten Fächern der Fächergruppe des zweiten Transportelements ausgerichtet sind und befüllt werden können.

Vorzugsweise weist die Fächergruppe des zweiten Transportelements mindestens 2f Fächer auf, da so eine besonders günstige Anordnung erreicht wird. Auf diese Weise können nämlich in der Fächergruppe des zweiten Transportelements die Stapel von jeweils zwei Fächergruppen des ersten Transportelements aufgenommen werden. Dabei wird mit den Stapeln, die sich in einer ersten Fächergruppe des ersten Transportelements befinden, zunächst jedes zweite Fach einer Fächergruppe des zweiten Transportelements gefüllt. Im Anschluss werden die Fächer einer zweiten Fächergruppe des ersten Transportelements derart positioniert, dass die in ihnen enthaltenen Stapel in die noch leeren Fächer der Fächergruppe des zweiten Transportelements überführt werden können.

Die Transportelemente können auf unterschiedliche Weise gestaltet sein. In einer vorteilhaften Ausgestaltung ist das zweite Transportelement als Produktzellenkette ausgebildet. Dabei weist die Produktzellenkette über ihre gesamte Länge gleichmäßig beabstandete Produktzellen auf. An beliebiger Stelle der Produktzellenkette ist dadurch eine Aufnahme der übergebenen Stapel möglich, d.h. eine Fächergruppe des zweiten Transportelements kann an jeder Stelle des zweiten Transportelements gebildet werden.

In einer anderen vorteilhaften Ausgestaltung sind bzw. ist die mindestens eine Fächergruppe des zweiten Transportelements und/oder die mindestens eine Fächergruppe des ersten Transportelements als Kassette ausgebildet. Dies hat den Vorteil hoher Variabilität. So können auf einfache Weise gefüllte Verpackungsstapel zur Inprozesskontrolle entnommen werden, um beispielsweise die korrekte Versiegelung der Verpackung oder den Gewicht ihres Inhaltes zu prüfen. Weiterhin können gefüllte Kassetten aus dem Prozess zur anderweitigen Verwendung entnommen werden oder aber zusätzliche gefüllte Kassetten eingesetzt werden, wenn zusätzliche Verpackungen für die Verpackung in einer Transportvorrichtung eingeschleust werden sollen. Auch kann man gefüllte Kassetten entnehmen und diese an einen Lagerort fahren und einlagern, wenn man die Verpackung in Transportbehälter unterbrechen möchte. Die Vorrichtung ist somit flexibler einsetzbar.

Das Positioniermittel zur Positionierung der Fächergruppe des ersten Transportelements relativ zur Fächergruppe des zweiten Transportelements kann zum Beispiel in sehr einfacher Weise ausgebildet sein, und zwar als beweglicher Anschlag für die Kassetten. Die als Kassette ausgebildete Fächergruppe des ersten Transportelements wird auf einem Band von der Verpackungsherstellungsmaschine zur zweiten Übergabeeinheit transportiert. An der zweiten Übergabeeinheit müssen das erste und das zweite Transportelement zueinander ausgerichtet werden, damit die Verpackungsstapel aus den Fächern des ersten Transportelements in jedes zweite Fach des zweiten Transportelements überführt werden können. Wenn das Positionierungsmittel als beweglicher Anschlag ausgebildet ist, läuft die Kassette gegen diesen Anschlag und ist so für die Übergabe fixiert. Der Anschlag kann auf einfache Weise bewegt und exakt positioniert werden. Als einfaches mechanisches Element ist ein Anschlag wenig anfällig für Fehler und somit wartungsarm.

Eine weitere vorteilhafte Gestaltung des Positioniermittels besteht darin, dass es durch das erste Transportelement gebildet wird, indem zum Beispiel das erste Transportelement genau so gesteuert und in einer Position zum Halten gebracht wird, dass das erste Transportelement zur direkten Überführung der Verpackungsstapel in das zweite Transportelement zu diesem ausgerichtet ist.

Für den Fall, dass die Fächergruppe des ersten Transportelements als Kassette ausgebildet ist, ist es besonders vorteilhaft, wenn die Vorrichtung des Weiteren ein Rücktransportelement zum Transport der geleerten Kassetten von der zweiten Übergabeeinheit zur ersten Übergabeeinheit aufweist. Dieses Rücktransportelement kann als separates Transportband ausgebildet sein. Für das Überführen der leeren Kassette auf das separate Transportband für den Rücktransport kann ein Schieber vorgesehen sein. Somit ist eine automatische Rückführung der geleerten Kassetten möglich. Auf diese Weise sind immer ausreichend Leerkassetten an der ersten Übergabeeinheit vorhanden.

Eine besonders flexible Gestaltung der erfindungemäßen Vorrichtung kann man dadurch erreichen, dass im Falle der Verwendung von Kassetten das erste Transportelement in zwei Transportelementabschnitte unterteilt ist, die jeweils einen eigenen Antrieb aufweisen. Ein Transportelementabschnitt ist in diesem Fall der Verpackungsherstellungsvorrichtung und der ersten Übergabeeinheit zugeordnet, der zweite Transportelementabschnitt ist der zweiten Übergabeeinheit zugeordnet. Die beiden Transportelemente können mit unterschiedlichen Geschwindigkeiten und unterschiedlicher Taktung betrieben werden. Damit wird die Taktung an der Verpackungsherstellungsvorrichtung unabhängig von der Taktung der zweiten Übergabeeinheit. Der erste Transportelementabschnitt kann zum Beispiel als Nockenband, der zweite als Flachriemenband ausgebildet sein. Die Kassette muss in relativ kurzer Zeit von der ersten Übergabeeinheit weg bewegt werden, um Platz für die nachfolgende zu befüllende Kassette zu machen. Mit einem Nockenband ist eine formschlüssige Verbindung zu der jeweiligen Kassette und somit ein sicherer Transport auch bei einer höheren Geschwindigkeit möglich. Der zweite Transportabschnitt hat im Falle der Ausbildung als Flachriemenband einen höheren Reibungskoeffizienten als der erste Transportabschnitt. Es ist somit möglich, den zweiten Transportabschnitt ansteigend auszubilden, um so eine etwa vorhandene Höhendifferenz zur Transportverpackung zu überwinden. Ein anderer Weg zum Höhenausgleich besteht darin, die Kassetten anzuheben, z.B. mit einem Aufzug oder einem Paternoster. Dabei ist der Aufzug oder der Paternoster zwischen dem ersten Transportelementabschnitt und dem zweiten Transportelementabschnitt angeordnet.

Von besonderem Vorteil ist es, wenn die Trennwände, durch die die Fächer der Fächergruppen gebildet sind, mindestens einer der Fächergruppen mindestens eines der Transportelemente eine strukturierte Oberfläche aufweisen. Strukturiert im Sinne der Erfindung bedeutet dabei, dass die Oberfläche nicht glatt ist, sondern eine Struktur aufweist. Diese kann reibungserhöhend sein, indem beispielsweise die Oberflächen aufgeraut sind, kleine Rillen aufweisen oder mit einem leicht haftenden Material beschichtet sind. Ebenso können die Trennwände formschlüssige Aufnahmen aufweisen wie zum Beispiel Rinnen oder Furchen. Solche Rinnen oder Furchen sind vorzugsweise im Wesentlichen horizontal ausgerichtet. Beim Einstapeln der Verpackungen werden diese in die Fächer gedrückt, verformen sich leicht, federn zurück und bleiben grundsätzlich an der strukturierten Oberfläche der Trennwände hängen. Das führt dazu, dass die Verpackungen durch Reibung in den Fächern gehalten werden und sich nicht mehr verdrehen können. Dadurch ist ein Verrutschen der Verpackungen praktisch ausgeschlossen.

Besonders bevorzugt sind die Trennwände der Fächer des ersten Transportelementes strukturiert. Ebenso können die Trennwände der Fächer des zweiten Transportelementes strukturiert sein. Besonders vorzuziehen ist eine Lösung, in der die Trennwände der Fächer beider Transportelemente strukturiert sind.

Eine solche Fächergruppe mit strukturierter Oberfläche der Trennwände ist für die Vorrichtung der vorliegenden Erfindung besonders geeignet, aber eine Fächergruppe, die mindestens zwei nebeneinander angeordnete Fächer aufweist, die durch Trennwände quer zur Transportrichtung gebildet sind, wobei die Fächer keine Wände in Transportrichtung aufweisen und wobei die Breite der Fächer B_{F} gleich oder im Wesentlichen gleich der Breite der Verpackungen B_{V} ist, bei der die Trennwände eine strukturierte Oberfläche aufweisen, ist auch geeignet, funktional eigenständig ganz allgemein zum Transport nicht frei stapelfähiger Verpackungen, insbesondere von Stickpacks, von einem Ort zu einem anderen, zum Beispiel von einer Verpackungsherstellungsvorrichtung zu einer Transportverpackstation, verwendet zu werden.

Bei solchen Fächergruppen bestand das Problem, das sich die darin transportierten nicht frei stapelfähigen Verpackungen schon bei einer geringen Anzahl übereinanderliegender Verpackungen, also bereits bei geringer Stapelhöhe, leicht gegeneinander verschieben. Insbesondere beim Überschieben von einer Fächergruppe in eine andere ergeben sich daraus Schwierigkeiten. Diese Probleme und Schwierigkeiten werden mit der erfindungsgemäßen Fächergruppe beseitigt, da die in den Fächern der Fächergruppe abgelegten Verpackungen kraft- und/oder formschlüssig von den Seitenwänden der Fächer fixiert und somit an einem Verrutschen gehindert werden.

Fächergruppen nach dem Stand der Technik, wie sie zum Beispiel in der US 6,321,904 beschrieben sind, sind zwar für die formschlüssige Aufnahme des zu transportierenden Gutes ausgebildet, jedoch sind sie nicht für die Aufnahme von Verpackungsstapeln geeignet und ausgebildet. Bei den Fächergruppen der US 6,321,904 handelt es sich um solche, bei denen die Wand selbst eine Form aufweist, die einen Formschluss mit dem Verpackungsgut bildet; eine Strukturierung der Oberfläche ist nicht vorgesehen. In gleicher Weise beschreibt die EP 1 216 937 eine Fächergruppe, die Wandungen aufweist, die eine vertikale Wellenstruktur aufweisen. Zweck dieser Wellenstruktur ist es, zu verhindern, dass Teile des zu transportierenden Gutes an den Wandungen haften bleiben. Dazu weisen die gewellten Wandungen insbesondere glatte und abgerundete Oberflächen auf, um jegliches Anhaften sicher auszuschließen.

Im Gegensatz zum Stand der Technik ist bei der erfindungsgemäßen Fächergruppe nicht die Wand selbst einer speziellen Formgebung unterworfen, die Form der Wand ist vielmehr frei wählbar, wobei eine einfache senkrechte oder im Wesentlichen senkrechte Wand, insbesondere aus Kostengründen, bevorzugt ist. Vielmehr bedeutet strukturiert im Sinne der Erfindung, dass die Oberfläche unabhängig von der Wandform nicht glatt ist, sondern eine Struktur aufweist. Durch eine solche Struktur kann eine kraft- und/oder eine formschlüssige Verbindung mit der Verpackung bewirkt werden. Die Struktur kann reibungserhöhend sein, indem beispielsweise die Oberfläche aufgeraut ist, kleine Rillen aufweist oder mit einem leicht haftenden Material beschichtet ist. Ebenso kann die Oberfläche der Trennwände formschlüssige Aufnahmen aufweisen wie zum Beispiel Rinnen oder Furchen.

Eine erfindungsgemäße Fächergruppe kann unterschiedlich verwirklicht sein. Bevorzugte Ausführungsformen sind eine Kassette oder eine Produktzellenkette.

In einer bevorzugten Ausführungsform der Fächergruppe ist die Fächerbreite in Transportrichtung B_{F} kleiner als die Verpackungsbreite in Transportrichtung B_{V} der zu transportierenden Verpackungen, wobei B_{F} vorzugsweise maximal um 10 % kleiner ist als Bv.

Weiterhin ist es besonders bevorzugt, dass die Strukturierung der strukturierten Oberfläche durch im Wesentlichen horizontal angeordnete Rillen, Rinnen oder Furchen ausgebildet ist. Beim Einstapeln der Verpackungen werden diese in die Fächer gedrückt, verformen sich leicht, federn zurück und bleiben grundsätzlich an der strukturierten Oberfläche der Trennwände hängen. Das führt dazu, dass die Verpackungen durch Reibung in den Fächern gehalten und durch Formschluss vertikal positioniert werden, so dass sie sich nicht verdrehen und/oder kippen können und horizontal ausgerichtet bleiben. Dadurch ist ein Verrutschen der Verpackungen praktisch ausgeschlossen. Außerdem unterstützt eine solche Ausbildung als im Wesentlichen horizontale Rillen, Rinnen oder Furchen den Prozess des Überschiebens der Verpackungen von einer Fächergruppe in eine andere, da die einzelnen Verpackungen in ihren Verpackungsstapeln entlang der Bewegungsbahn beim Überschieben geführt werden.

Die Vorrichtung zum Transport von nicht frei stapelbaren Verpackungen gemäß der vorliegenden Erfindung ist eine eigenständige Einheit. Sie kann jedoch ebenfalls Teil einer Verpackungslinie sein, die eine Verpackungsherstellungsvorrichtung, die erfindungsgemäße Transportvorrichtung und eine Transportverpackstation wie beispielsweise einen Kartonierer umfasst.

Zur Lösung der Aufgabe der vorliegenden Erfindung wird ferner ein Verfahren der eingangs genannten Art vorgeschlagen, das die folgenden Schritte umfasst:
- Übergeben von Verpackungen aus der Verpackungsherstellungsvorrichtung in eine mindestens f Fächer mit einer Breite gleich oder im Wesentlichen gleich der Breite der Verpackungen aufweisende Fächergruppe eines ersten Transportelements, wobei f der Anzahl F der Fallkanäle oder einem Vielfachen davon entspricht und der Mittenabstand X der Fächer des ersten Transportelements dem Mittenabstand P der Fallkanäle entspricht oder im Wesentlichen entspricht (X = P) derart, dass in F Fächern der Fächergruppe je ein Stapel aus mindestens einer Verpackung gebildet wird;
- Verfahren des ersten Transportelements zu einer zweiten Übergabeeinheit;
- Positionieren der Fächergruppe des ersten Transportelements relativ zu einer Fächergruppe eines zweiten Transportelements, die mindestens 2f Fächer mit einer Breite gleich oder im Wesentlichen gleich der Breite der Verpackungen aufweist, wobei der Mittenabstand Y der Fächer des zweiten Transportelements dem halben Mittenabstand P der Fallkanäle entspricht (Y = P/2) oder im Wesentlichen entspricht, derart, dass jedes Fach der Fächergruppe einem n-ten (n = 1, 3, 5,... r) Fach einer Gruppe von 2f Fächern zugeordnet ist;
- Übergeben der Stapel aus jedem Fach der Fächergruppe des ersten Transportelements quer zur Transportrichtung an die Fächergruppe des zweiten Transportelements derart, dass zunächst jedes n-te Fach einer Gruppe von 2f Fächern gefüllt wird;
- Verfahren einer weiteren Fächergruppe des ersten Transportelements zu der zweiten Übergabeeinheit und Positionieren der Fächergruppe des ersten Transportelements derart, dass jedes freie (n+1)te Fach der Gruppe einem Fach der Fächergruppe des ersten Transportelements zugeordnet ist;
- Übergeben der Stapel aus mindestens zwei Verpackungen aus jedem Fach der Fächergruppe des ersten Transportelements quer zur Transportrichtung an jedes (n+1)te Fach der Gruppe G der Fächergruppe des zweiten Transportelements; und
- Transportieren der Gruppe G zu einer Transportverpackstation.

Mit diesem Verfahren wird ein Verdichten der Verpackungen beim Transport erreicht, wobei der Verdichtungsvorgang vom Stapelvorgang räumlich getrennt wird.

Vorteilhafterweise schließt sich an das vorstehend beschriebene Verfahren die Übergabe mindestens eines Verpackungsstapels an einen Transportbehälter in einer Transportverpackstation an. Dieser Vorgang wird üblicherweise von einem Kartonierer durchgeführt. Dabei kann ein einziger Stapel in den Transportbehälter überführt werden, vorzugsweise werden jedoch zwei oder mehr Stapel in den Transportbehälter überführt.

Für die Übergabe der Verpackungsstapel an der zweiten Übergabeeinheit ist es erforderlich, dass das erste Transportelement und das zweite Transportelement derart synchronisiert werden, dass die Fächer der Fächergruppe des ersten Transportelement mit denjenigen des zweiten Transportelements ausgerichtet werden können, um eine Übergabe der Verpackungsstapel zu ermöglichen. Dazu können die beiden Transportelemente mit der gleichen Geschwindigkeit nebeneinander laufen, so dass sich die relevanten Fächer gegenüberliegen. Bevorzugt ist jedoch eine Verfahrensführung, bei der das zweite Transportelement zum Zeitpunkt der Übergabe der Verpackungen steht, da so ein eindeutiger Ort für die Übergabe definiert ist. Ebenfalls ist es bevorzugt, wenn das zweite Transportelement bei der Übergabe der Verpackungen an den Transportbehälter steht. In einer besonders bevorzugten Variante sind die Übergabezeitpunkte an der zweiten Übergabestation und am Transportbehälter aufeinander abgestimmt, so dass parallel an beiden Orten eine Übergabe stattfinden kann.

Die Erfindung wird nachfolgend beispielhaft für eine Verpackungslinie für Stickpacks beschrieben.

Die im Folgenden anhand der beigefügten Zeichnung beschrieben weiteren Merkmale oder Weiterbildungen der Erfindung stellen jeweils für sich betrachtet oder in Kombination miteinander bevorzugte Ausführungsformen der Erfindung dar.

Es zeigen
Fig. 1a und 1b eine schematische Seitenansicht einer Fächergruppe eines ersten Transportelements einer Ausführungsform der erfindungsgemäßen Transportvorrichtung in einer Beladeposition unterhalb einer Verpackungsherstellungsvorrichtung, wobei Fig. 1a die Fächer gefüllt mit einer Verpackung, Fig. 1b die Fächer gefüllt mit fünfzehn Verpackungen zeigt;
Fig. 2 eine schematische Seitenansicht der Ausführungsform der erfindungsgemäßen Transportvorrichtung, eingebunden in eine Anordnung mit Verpackungsherstellungsvorrichtung und Transportverpackstation;
Fig. 3 eine Draufsicht der in Fig. 2 gezeigten Anordnung;
Fig. 4a bis d in schematischer Darstellung die Schritte der Übergabe der Verpackungsstapel von der Fächergruppe des ersten Transportelements zu der Fächergruppe des zweiten Transportelements in der zweiten Übergabeeinheit gemäß der Ausführungsform;
Fig. 5a bis 5c schematisch die Befüllung der Transportvorrichtung in der Transportverpackstation in unterschiedliche große Transportbehälter, und zwar in Fig. 5a für einen Transportbehälter, der einen Verpackungsstapel aufnehmen kann, Fig. 5b für einen Transportbehälter, der zwei Verpackungsstapel aufnehmen kann, und Fig. 5c für einen Transportbehälter, der drei Verpackungsstapel aufnehmen kann..
Fig. 6a ist eine perspektivische Ansicht einer erfindungsgemäßen Fächergruppe, in der die Trennwände eine strukturierte Oberfläche aufweisen, und Fig. 6b ist ein vergrößerter Ausschnitt der Fig. 6b

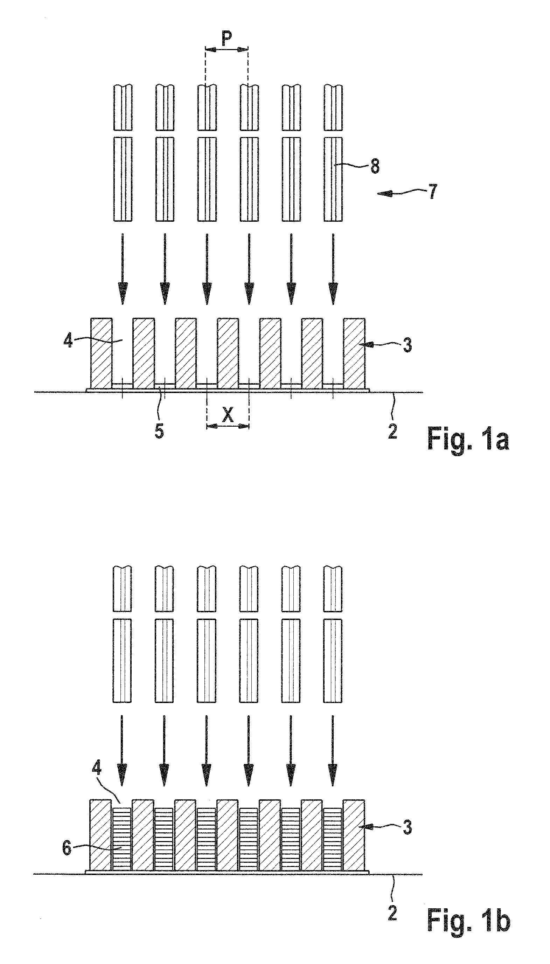

Fig. 1a zeigt schematisch Fallkanäle 8 einer Verpackungsherstellungsvorrichtung 7 zur Herstellung und Befüllung von Stickpacks, die im Folgenden als Stickpackmaschine bezeichnet wird. Die Stickpackmaschine arbeitet auf n Bahnen, die jeweils mit einem Mittenabstand P beabstandet sind. Entsprechend weisen auch die Fallkanäle 8 am Ende der Bahnen einen Abstand P auf, der ungefähr der doppelten Breite eines Stickpacks entspricht. In der gezeigten Ausführungsform ist die Anzahl der Bahnen und Fallkanäle F = 6, aber üblich sind insbesondere auch Werte von F = 2, 4, 8, 10, 12, 14 oder 16. Aus den Fallkanälen 8 fallen die fertig produzierten Stickpacks 5 heraus. Unter der Stickpackmaschine ist eine als Kassette ausgebildete Fächergruppe 3 eines ersten Transportelements 2 derart angeordnet, dass die Fächer 4 der Kassette 3 jeweils genau unterhalb eine Fallkanals 8 angeordnet sind. Diese Position ist die Beladeposition der Kassette. Die Kassette 3 der gezeigten Ausführungsform weist f = 6 Fächer auf, entsprechend den sechs Fallkanälen der Stickpackmaschine. Die Stickpackmaschine arbeitet getaktet, in der Regel mit 60 Takten pro Minute. Es sind aber auch andere Taktzahlen zwischen 40 Takte pro Minute und 70 Takte pro Minute üblich. Die Stickpackmaschine legt in jedem Takt mit einer ersten Übergabeeinheit 9 in jedes der f Fächer 4 der Kassette 3 gleichzeitig einen der produzierten F Stickpacks ab. Die Kassette hat die Teilung X = P, d.h. die Teilung der Kassette ist gleich der Teilung der Stickpackmaschine 7. Die Stickpackmaschine stapelt Takt für Takt in die Kassette 3, bis die gewünschte Stapelhöhe erreicht ist. Der in der Fig. 1b gezeigte Stapel 6 hat die Stapelhöhe 15. Die Stapelhöhe kann auch andere Werte gleich oder größer als 2 annehmen. Die Stapelhöhe ist durch die Höhe der Wände der Kassette 3 begrenzt.

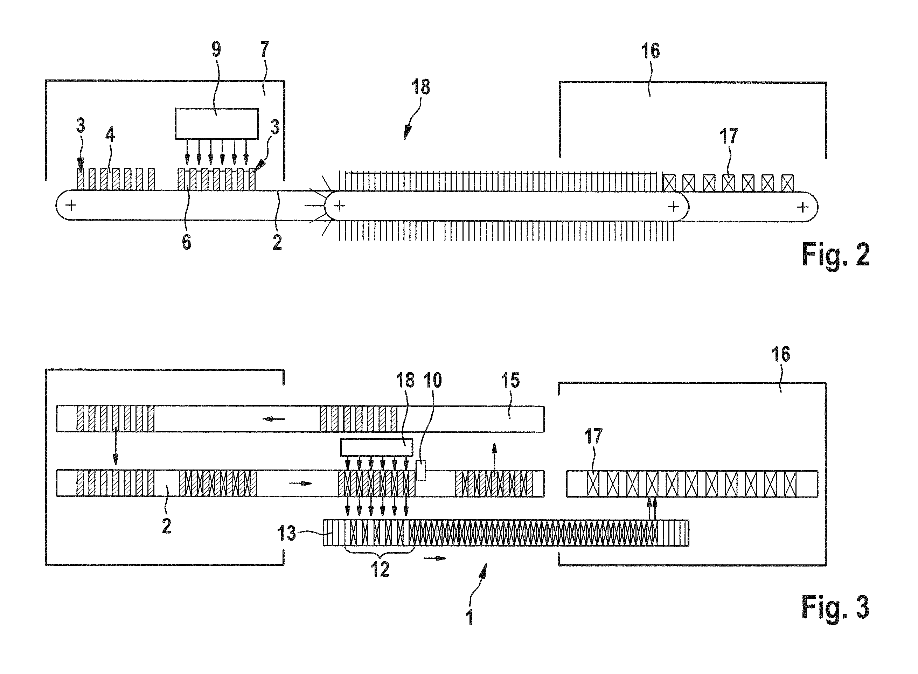

Mit Bezug auf die Figuren 2 und 3 werden im Folgenden die erfindungsgemäße Vorrichtung und der mit ihr durchgeführte Transportprozess beschrieben. Die Fig. 2 ist eine schematische Seitenansicht, die Fig. 3 zeigt dieselbe Anordnung in einer schematischen Draufsicht.

Fig. 2 ist eine schematische Seitenansicht. Unter den durch Pfeile angedeuteten Fallkanälen der Stickpackmaschine befindet sich eine Kassette 3 in einer Beladeposition. Die Fächer 4 der Kassette sind bereits mit Stickpackstapeln 6 gefüllt. In Transportrichtung hinter der Kassette 3 befindet sich eine weitere Kassette 3, deren Fächer 4 noch leer sind. Wenn die Kassette 3 mit den F Stapeln gefüllt ist, wird die Kassette durch ein erstes Transportelement 2, das als Nockenband ausgebildet ist, von der Beladeposition unterhalb der Stickpackmaschine 7 in Richtung der als Kartonierer ausgebildeten Transportverpackstation 16 transportiert. Durch die Bewegung des Transportbandes 2 wird die sich hinter der gefüllten Kassette befindende leere Kassette 3 in die Beladeposition gebracht. Das Transportelement 2 kann auch in Form von zwei Transportelementabschnitten als zwei Transportbänder ausgeführt sein. In diesem Fall könnten zwei unterschiedlichen Arten von Transportbändern verwendet werden, zum Beispiel ein Nockenband für das erste Transportband und ein Flachriemenband für das zweite Transportband. Die gefüllte Kassette 3 wird in diesem Fall von dem Nockenband auf das Flachriemenband geschoben, auf dem sie zu einer zweiten Übergabeeinheit 18 transportiert wird. Durch Verwendung von zwei Transportelementabschnitten ist auch die Überwindung eines Höhenunterschieds möglich, indem ein Band ansteigend ausgebildet ist oder durch Anordnung eines Aufzuges oder eines Paternosters zwischen den beiden Transportelementabschnitten. Die gefüllte Kassette wird in diesem Fall von dem ersten Transportelementabschnitt in einen Aufzug überführt und nach oben verfahren. Am oberen Ende wird die Kassette mittels eines pneumatischen Schiebers zwecks Transports zur zweiten Übergabeeinheit auf den als Nockenband ausgebildeten zweiten Transportelementabschnitt geschoben.

An der Übergabeeinheit 18 wird die Kassette 3 mit Hilfe eines Positioniermittels 10, das in dem vorliegenden Ausführungsbeispiel als beweglicher Anschlag ausgebildet ist, gestoppt und so positioniert, dass die mit den Stapeln 6 gefüllten Fächer 4 der Kassette 3 mit den Fächern 11 der Fächergruppe 12 einem zweiten Transportelement 13, das in diesem Beispiel als Produktzellenkette ausgeführt ist, so ausgerichtet sind, dass die Stapel von der Kassette 3 in die Fächer 11 der Fächergruppe 12 der Produktzellenkette 13 geschoben werden können.

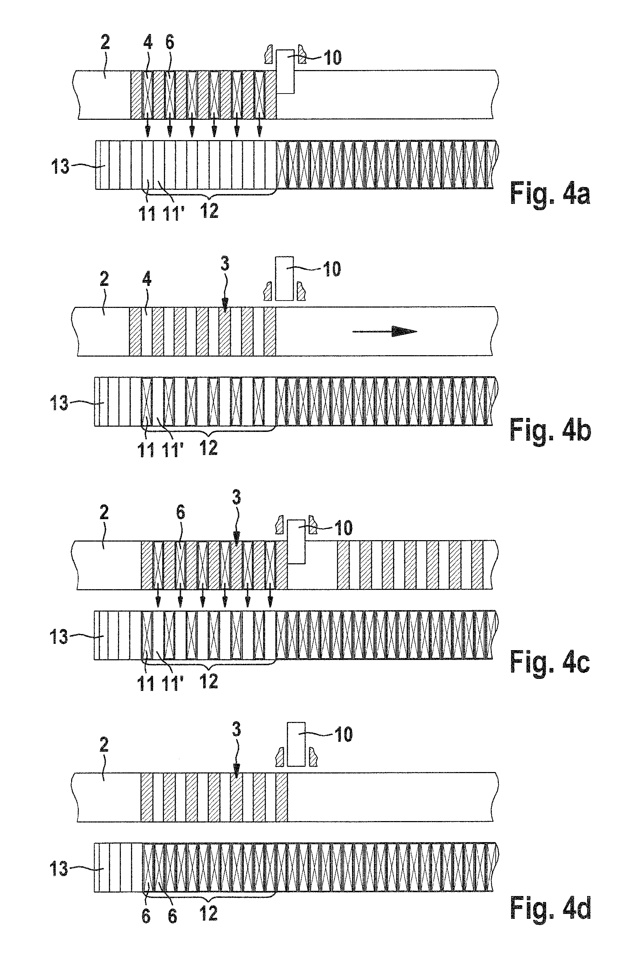

Fig. 4a bis 4d zeigen die einzelnen Schritte im Übergabeprozess zwischen Kassette 3 und Produktzellenkette 13. Während die Kassette die Teilung X = P aufweist, ist die Teilung der Produktzellenkette Y = P/2. Fig. 4a zeigt die Kassette 3, die von dem beweglichen Anschlag 10 gestoppt und positioniert wurde. Die Positionierung erfolgt derart, dass jedem gefüllten Fach 4 der Kassette 3 ein leeres Fach 11 einer Fächergruppe 12 der Produktzellenkette 13 gegenüberliegt. In der gezeigten Ausführungsform umfasst die Fächergruppe der Produktzellenkette zwölf Fächer.

Die F Stapel werden gleichzeitig mit der zweiten Übergabeeinheit 18, die in dem vorliegenden Ausführungsbeispiel als Überschieber ausgeführt ist, aus der Kassette 3 in die Produktzellenkette 13 überschoben. Während des Überschubvorgangs steht die Produktzellenkette, oder sie bewegt sich synchron zur Kassette. Wie in Fig. 4b gezeigt, ist von den Fächern 11 einer Fächergruppe der Produktzellenkette zunächst nur jedes n-te Fach 11 (n = 1, 3, 5, 7, 9, 11) mit einem Stickpackstapel gefüllt. Jedes (n+1)te Fach 11' ist noch leer. Zwischen zwei gefüllten Fächern 11 befindet sich also immer ein leeres Fach 11'.

Im nächsten Schritt wird der Anschlag 10 gelöst. Die nun leere Kassette 3 wird weiter transportiert und mit einem Schieber (nicht gezeigt) quer auf ein zur Stickpackmaschine zurücklaufendes Rücktransportband 15 geschoben. Das Rücktransportband 15 ist in der Fig. 3 gezeigt. Im Bereich der Stickpackmaschine wird die Kassette 3 von einem weiteren Schieber (nicht gezeigt) wiederum auf das Nockenband 2 geschoben, das die Kassette 3 wieder zunächst in die Beladeposition unter die Fallkanäle 8 transportiert.

Im Übergabebereich wird die nächste Kassette 3 vom beweglichen Anschlag 10 so gestoppt und positioniert, dass die F Stapel dieser Kassette den noch leeren Fächern 11' zwischen den bereits gefüllten Fächern 11 der Fächergruppe 12 der Produktzellenkette 13 gegenüberliegen. Diese Anordnung ist in der Fig. 4c gezeigt. Zeitlich parallel werden die F Stickpackstapel in die noch freien Fächer 11' der Produktzellenkette geschoben. In Fig. 4d ist zu sehen, wie nun alle Fächer 11, 11' der Fächergruppe 12 der Produktzellenkette 13 mit Stickpackstapeln 6 gefüllt sind, während die Fächer 4 der Kassette 3 leer sind. Die leere Kassette 3 wird auf das Rücktransportband 15 geschoben und zurück zur Stickpackmaschine transportiert.

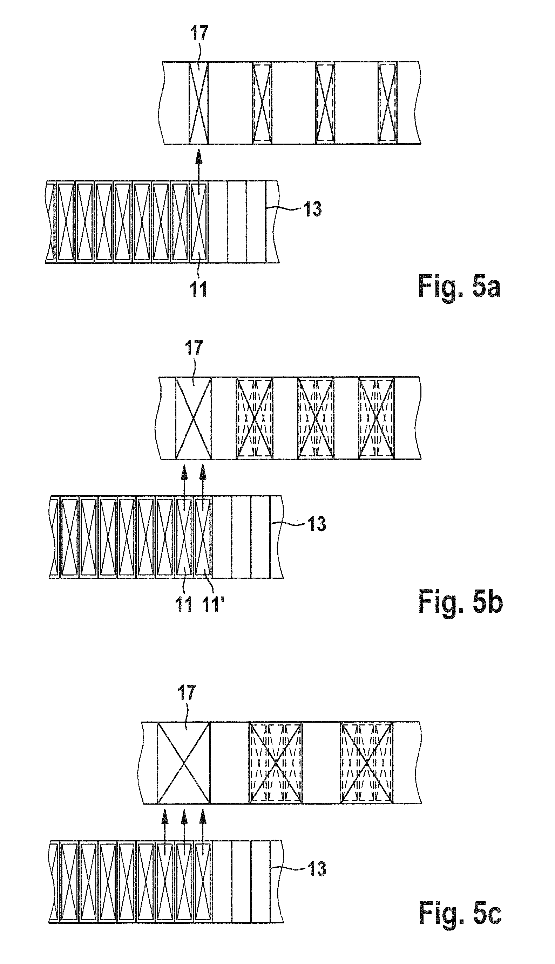

Die Produktzellenkette 13 wird zum Einschubbereich des Kartonierers 16 getaktet. Am Kartonierer werden m Stickpackstapel (m= 1, 2, 3, 4, 5) gleichzeitig in einen Karton 17 geschoben. Während die Stapel eingeschoben werden, steht die Produktzellenkette. Nach dem Einschub taktet die Produktzellenkette weiter, damit die nächsten m Stickpackstapel eingeschoben werden können. In den Fig. 5a bis 5c ist die Positionierung der Fächer der Produktzellenketten relativ zu den Kartons im Kartonierer für den Fall des Verpackens von 1, 2 oder 3 Stickpackstapeln gezeigt. Fig. 5a zeigt eine Anordnung beim Überschieben nur eines Stickpackstapels in einen Karton. In Fig. 5b ist gezeigt, wie zwei Stickpackstapel in einen Karton weiterverpackt werden. In Fig. 5c schließlich ist gezeigt, wie drei Stickpackstapel gemeinsam in einen Karton verbracht werden.

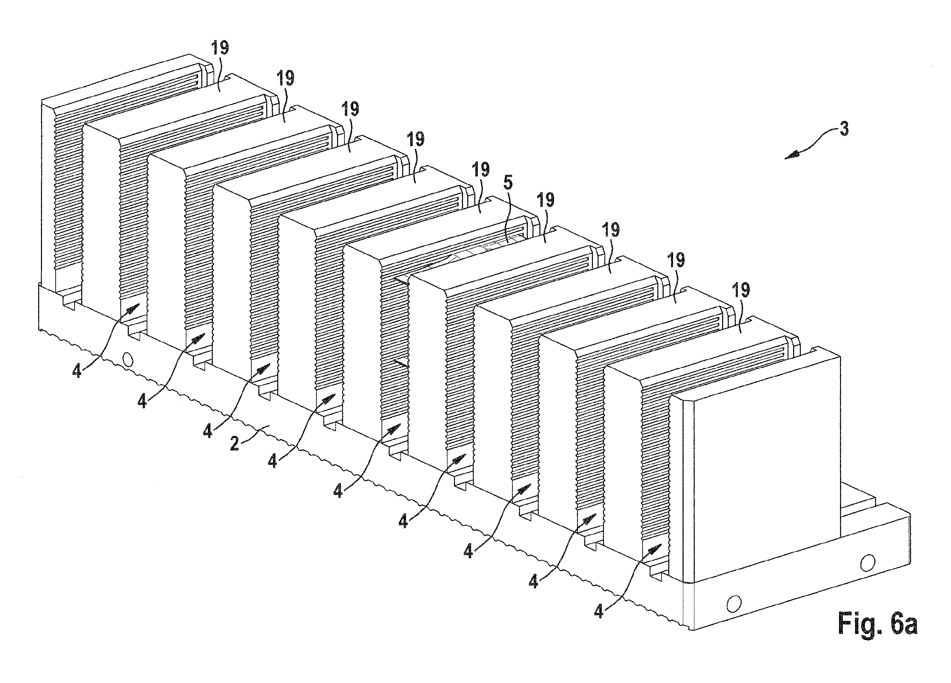

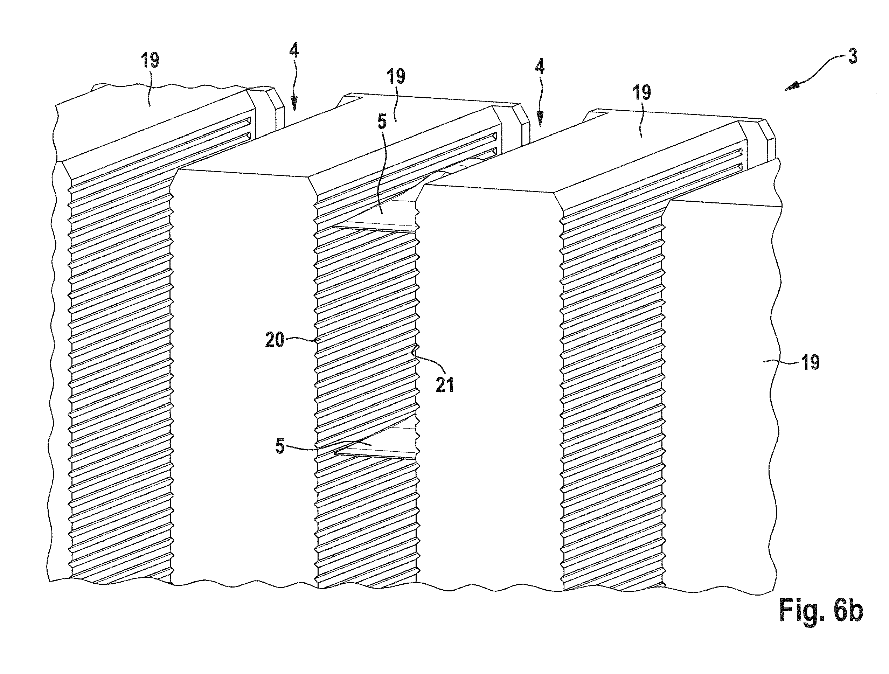

Fig. 6a und 6b zeigen eine Fächergruppe 3 zum Transport von Stickpackstapeln 6 aus Stickpacks 5. Die Fächergruppe 3 weist Trennwände 19 auf, die die Fächer 4, bezogen auf die Transportrichtung vorn und hinten begrenzen. An den Seiten weisen die Fächer 4 keine Wände auf. Die Trennwände 19 der Fächer 4 der Fächergruppe 3 weisen eine strukturierte Oberfläche auf, indem sie Rillen 20, 21 aufweisen. Beim Einstapeln der Stickpacks 5 unter einer Verpackungsherstellungsmaschine 7 werden die Stickpacks 5 in die Fächer 4 der Kassette 3 gedrückt. Die Stickpacks 5 verformen sich leicht, federn jedoch zurück, und sie bleiben grundsätzlich in den Rillen 20, 21 hängen. Dabei kommt es auch vor, dass sich die vordere und die hintere Stickpacknaht nicht in Rillen 20, 21 gleicher Höhe auf der jeweiligen Trennwand abstützen, sondern sich beispielsweise die hintere Naht in einer Rille 20 der einen Trennwand abstützt, die vordere Naht hingegen in einer um eins höher oder niedriger angeordneten Rille 21 auf der gegenüberliegenden Trennwand 19. Das führt dazu, dass der Stickpack 5 durch Reibung in der Kassette 3 gehalten wird und sich nicht verdrehen oder kippen kann. Der Stickpack wird zugleich vertikal positioniert und horizontal ausgerichtet.

Die vorstehend als eigenständiges Element beschriebene Fächergruppe 3 kann vorzugsweise als Teil des Transportelements 2 bei einer Vorrichtung, wie in den Fig. 1 bis 5 gezeigt, zum Einsatz kommen.

## Patentansprüche

1. Vorrichtung (1) zum Transport von nicht frei stapelfähigen Verpackungen, insbesondere von Stickpacks, von einer Verpackungsherstellungsvorrichtung (7) zu einem Transportbehälter (17) in einer Transportverpackstation (16) unter gleichzeitiger verdichtender Anordnung der Verpackungen, wobei die Verpackungen von einer Maschine (7) hergestellt werden, die mindestens zwei Fallkanäle (8) aufweist, die gleichmäßig oder im wesentlichen gleichmäßig voneinander durch einen Mittenabstand P beabstandet sind, wobei die Vorrichtung Folgendes umfasst:
- ein erstes Transportelement (2) mit mindestens einer Fächergruppe (3) zur Aufnahme der von der Verpackungsherstellungsvorrichtung (7) abgegebenen Verpackungen und zum Transport der Verpackungen in Richtung der Transportverpackstation (16);
- eine Übergabeeinheit (9) zur Übergabe der Verpackungen aus der Verpackungsherstellungsvorrichtung (7) an die mindestens eine Fächergruppe (3) des ersten Transportelements (2) und zur Stapelbildung in der Fächergruppe;
- ein zweites Transportelement (13) mit mindestens einer Fächergruppe (12) zum Transport der Verpackungen zu der Transportverpackstation (16),
- wobei die Fächer (4, 11, 11') der Fächergruppen (3, 12) des ersten und des zweiten Transportelements jeweils eine Breite gleich oder im Wesentlichen gleich der Breite der Verpackungen aufweisen,
**dadurch gekennzeichnet, dass**
- die Fächergruppe (3) des ersten Transportelements (2) mindestens f Fächer (4) aufweist und f der Anzahl F der Fallkanäle (8) oder einem Vielfachen davon entspricht,
- der Mittenabstand X der Fächer (4) des ersten Transportelements (2) dem Mittenabstand P der Fallkanäle entspricht (X = P) oder im Wesentlichen entspricht,
- der Mittenabstand Y der Fächer (11, 11') des zweiten Transportelements (13) dem halben Mittenabstand P der Fallkanäle entspricht (Y = P/2) oder im Wesentlichen entspricht und
- die Vorrichtung des Weiteren eine zweite Übergabeeinheit (18) zur Übergabe der Verpackungen vom ersten Transportelement (2) an das zweite Transportelement (13) umfasst,
- wobei der Vorrichtung ein Positioniermittel (10) zur Positionierung der Fächergruppe (3) des ersten Transportelements (2) relativ zur Fächergruppe (12) des zweiten Transportelements (13) zugeordnet ist.

2. Vorrichtung nach Anspruch 1, **dadurch gekennzeichnet, dass** die Fächergruppe (12) des zweiten Transportelements (13) mindestens 2f Fächer (11, 11') aufweist.

3. Vorrichtung nach Anspruch 1 oder 2, **dadurch gekennzeichnet, dass** das zweite Transportelement (13) als Produktzellenkette ausgebildet ist.

4. Vorrichtung nach Anspruch 1 oder 2, **dadurch gekennzeichnet, dass** die mindestens eine Fächergruppe (12) des zweiten Transportelements (13) als Kassette ausgebildet ist.

5. Vorrichtung nach einem der Ansprüche 1 bis 4, **dadurch gekennzeichnet, dass** die mindestens eine Fächergruppe (3) des ersten Transportelements (2) als Kassette ausgebildet ist.

6. Vorrichtung nach Anspruch 4 oder 5, **dadurch gekennzeichnet, dass** das Positioniermittel (10) als beweglicher Anschlag für die Kassette ausgebildet ist.

7. Vorrichtung nach Anspruch 5 oder 6, **dadurch gekennzeichnet, dass** die Vorrichtung des Weiteren ein Rücktransportelement (15) zum Transport der geleerten Kassetten von der zweiten Übergabeeinheit (18) zur ersten Übergabeeinheit (9) umfasst.

8. Vorrichtung nach eine der Ansprüche 1 bis 7, **dadurch gekennzeichnet, dass** das erste Transportelement (2) in zwei Transportelementabschnitte unterteilt ist, die jeweils einen eigenen Antrieb aufweisen.

9. Vorrichtung nach einem der Ansprüche 1 bis 8, **dadurch gekennzeichnet, dass** das Positioniermittel (10) durch das erste Transportelement (2) gebildet ist.

10. Vorrichtung nach einem der Ansprüche 1 bis 9, **dadurch gekennzeichnet, dass** die Fächer (4, 11, 11') durch Trennwände (19) gebildet sind, wobei die Trennwände (19) der Fächer (4, 11, 11') mindestens einer der Fächergruppen (3, 12) mindestens eines der Transportelemente (2, 13) eine strukturierte Oberfläche aufweisen.

11. Verfahren zum Transportieren von nicht frei stapelfähigen Verpackungen von einer Verpackungsherstellungsvorrichtung (7), die mindestens zwei Fallkanäle (8) aufweist, die gleichmäßig oder im wesentlichen gleichmäßig voneinander durch einen Mittenabstand P beabstandet sind, zu einem Transportbehälter (17) in einer Transportverpackstation (16) unter verdichtender Anordnung der Verpackungen, das die folgenden Schritte umfasst:
- Übergeben von Verpackungen aus der Verpackungsherstellungsvorrichtung (7) in eine mindestens f Fächer (4) mit einer Breite gleich oder im Wesentlichen gleich der Breite der Verpackungen aufweisende Fächergruppe (3) eines ersten Transportelements (2), wobei f der Anzahl F der Fallkanäle (8) oder einem Vielfachen davon entspricht und der Mittenabstand X der Fächer (4) des ersten Transportelements (2) dem Mittenabstand P der Fallkanäle entspricht oder im Wesentlichen entspricht (X = P) derart, dass in F Fächern der Fächergruppe je ein Stapel aus mindestens einer Verpackung gebildet wird;
- Verfahren des ersten Transportelements zu einer zweiten Übergabeeinheit;
- Positionieren der Fächergruppe (3) des ersten Transportelements (2) relativ zu einer Fächergruppe (12) eines zweiten Transportelements (13), die mindestens 2f Fächer (11) mit einer Breite gleich oder im Wesentlichen gleich der Breite der Verpackungen aufweist, wobei der Mittenabstand Y der Fächer (11) des zweiten Transportelements dem halben Mittenabstand P der Fallkanäle (8) entspricht (Y = P/2) oder im Wesentlichen entspricht, derart, dass jedes Fach (4) der Fächergruppe (3) einem n-ten (n = 1, 3, 5,... r) Fach (11) einer Gruppe von 2f Fächern zugeordnet ist;
- Übergeben der Stapel aus jedem Fach (4) der Fächergruppe des ersten Transportelements (2) quer zur Transportrichtung an die Fächergruppe (12) des zweiten Transportelements (13) derart, dass zunächst jedes n-te Fach (11) einer Gruppe von 2f Fächern gefüllt wird;
- Verfahren einer weiteren Fächergruppe (3) des ersten Transportelements (2) zu der zweiten Übergabeeinheit (18) und Positionieren der Fächergruppe (3) des ersten Transportelements (2) derart, dass jedes freie (n+1)te Fach (11') der Gruppe einem Fach (4) der Fächergruppe (3) des ersten Transportelements (2) zugeordnet ist;
- Übergeben der Stapel aus mindestens zwei Verpackungen aus jedem Fach (4) der Fächergruppe (3) des ersten Transportelements (2) quer zur Transportrichtung an jedes (n+1)te Fach (11') der Gruppe G der Fächergruppe (3) des zweiten Transportelements (2); und
- Transportieren der Gruppe G zu einer Transportverpackstation (16).

12. Verfahren nach Anspruch 11, **dadurch gekennzeichnet, dass** an der Transportverpackstation (16) mindestens ein Stapel der in den Fächern (11, 11') der Gruppe G befindlichen Verpackungsstapel in einen Transportbehälter (17) übergeben wird.

13. Verfahren nach Anspruch 11 oder 12, **dadurch gekennzeichnet, dass** das zweite Transportelement (13) während der Übergabe der Verpackungen in der zweiten Übergabeeinheit (18) an das zweite Transportelement und/oder während der Übergabe der Verpackungen an den Transportbehälter (17) steht.

14. Transportlinie zum Transport von nicht frei stapelfähigen Verpackungen, insbesondere von Stickpacks, umfassend eine Verpackungsherstellungsvorrichtung (7) zur Herstellung von nicht frei stapelfähigen Verpackungen, eine Transportverpackstation (16) zum weiteren Verpacken der nicht frei stapelfähigen Verpackungen in einen Transportbehälter (17), **dadurch gekennzeichnet, dass** die Transportlinie des weiteren eine Transportvorrichtung (1) nach einem der Ansprüche 1 bis 10 umfasst.

## Claims

1. An apparatus (1) for transporting packagings that are not freely stackable, in particular stickpacks, from a packaging producing apparatus (7) to a transport container (17) in a transport packaging station (16) with simultaneous compacting arrangement of the packagings, the packagings being produced by the packaging producing apparatus (7), having at least two dropping channels (8), which are uniformly or substantially uniformly spaced apart from each other by a centre-to-centre distance P, the apparatus comprising the following:
- a first transport element (2) having at least one compartment group (3) for receiving the packagings dispensed by the packaging producing apparatus (7) and for transporting the packagings in the direction of the transport packaging station (16);
- a transfer unit (9) for transferring the packagings from the packaging producing apparatus (7) to the at least one compartment group (3) of the first transport element (2) and for forming stacks in the compartment group;
- a second transport element (13) having at least one compartment group (12) for transporting the packagings to the transport packaging station (16),
- the compartments (4, 11, 11') of the compartment groups (3, 12) of the first and the second transport element each having a width equal or substantially equal to the width of the packagings,
**characterised in that**
- the compartment group (3) of the first transport element (2) has at least f compartments (4), and f corresponds to the number F of the dropping channels (8) or a multiplicity thereof,
- the centre-to-centre distance X of the compartments (4) of the first transport element (2) corresponds (X = P) or substantially corresponds to the centre-to-centre distance P of the dropping channels,
- the centre-to-centre distance Y of the compartments (11, 11') of the second transport element (13) corresponds or substantially corresponds to half (Y = P/2) the centre-to-centre distance P of the dropping channels, and
- the apparatus further comprises a second transfer unit (18) for transferring the packagings from the first transport element (2) to the second transport element (13),
- wherein a positioning means (10) is assigned to the apparatus for positioning the compartment group (3) of the first transport element (2) relative to the compartment group (12) of the second transport element (13).

2. The apparatus according to claim 1, **characterised in that** the compartment group (12) of the second transport element (13) has at least 2f compartments (11, 11').

3. The apparatus according to claim 1 or 2, **characterised in that** the second transport element (13) is designed as a product cell chain.

4. The apparatus according to claim 1 or 2, **characterised in that** the at least one compartment group (12) of the second transport element (13) is designed as a cassette.

5. The apparatus according to any one of claims 1 to 4, **characterised in that** the at least one compartment group (3) of the first transport element (2) is designed as a cassette.

6. The apparatus according to claim 4 or 5, **characterised in that** the positioning means (10) is designed as a movable stop for the cassette.

7. The apparatus according to claim 5 or 6, **characterised in that** the apparatus further comprises a return transport element (15) for transporting the empty cassettes from the second transfer unit (18) to the first transfer unit (9).

8. The apparatus according to any one of the claims 1 to 7, **characterised in that** the first transport element (2) is divided into two transport element sections each having its own individual drive.

9. The apparatus according to any one of claims 1 to 8, **characterised in that** the positioning means (10) is formed by the first transport element (2).

10. The apparatus according to any one of claims 1 to 9, **characterised in that** the compartments (4, 11, 11') are formed by separating walls (19), wherein the separating walls (19) of compartments (4, 11, 11') of at least one of the compartment groups (3, 12) of at least one of the transport elements (2, 13) has a structured surface.

11. A method for transporting packagings that are not freely stackable from a packaging producing apparatus (7) having at least two dropping channels (8) that are uniformly or substantially uniformly distanced from each other by a centre-to-centre distance P, to a transport container (17) in a transport packaging station (16) with a compacting arrangement of the packaging, comprising the following steps:
- transferring packagings from the packaging producing apparatus (7) into a compartment group (3) of a first transport element (2) having at least f compartments (4) with a width equal, or substantially equal, to the width of the packagings, wherein f corresponds to the number F of the dropping channels (8) or a multiplicity thereof, and the centre-to-centre distance X of the compartments (4) of the first transport element (2) corresponds, or substantially corresponds, to the centre-to-centre distance P of the dropping channels (X = P), such that a stack of at least two packagings is formed in each of F compartments of the compartment group;
- moving the first transport element to a second transfer unit;
- positioning the compartment group (3) of the first transport element (2) relative to a compartment group (12) of a second transport element (13) which has at least 2f compartments (11) having a width that is equal, or substantially equal, to the width of the packagings, wherein the centre-to-centre distance Y of the compartments (11) of the second transport element corresponds, or substantially corresponds, to half the centre-to-centre distance P of the dropping channels (8), (Y = P/2), such that each compartment (4) of the compartment group (3) is assigned to an nth (n = 1, 3, 5,... r) compartment (11) of a group of 2f compartments;
- transferring the stacks from each compartment (4) of the compartment group of the first transport element (2) transverse to the direction of transport to the compartment group (12) of the second transport element (13) such that initially, each nth compartment (11) of a group of 2f compartments is filled;
- moving a further compartment group (3) of the first transport element (2) to the second transfer unit (19) and positioning the compartment group (3) of the first transport element (2) such that each empty (n+1)th compartment (11') of the group is assigned to a compartment (4) of the compartment group (3) of the first transport element (2);
- transferring the stacks of at least two packagings from each compartment (4) of the compartment group (3) of the first transport element (2) transverse to the direction of transport at each (n+1)th compartment (11') of the group G of the compartment group (3) of the second transport element (2); and
- transporting the group G to a transport packaging station (16).

12. The method according to claim 11, **characterised in that** at least one stack of the stack of packagings located in the compartments (11, 11') of the group G is transferred at the transport packaging station (16) into a transport container (17).

13. The method according to claim 11 or 12, **characterised in that** the second transport element (13) is stationary during the transfer of packagings into the second transfer unit (19) at the second transport element and/or during the transfer of the packagings into the transport container (17).

14. A transport line for transporting packagings that are not freely stackable, in particular stickpacks, comprising a packaging producing apparatus (7) for producing packagings that are not freely stackable, a transport packaging station (16) for further packaging of the packagings that are not freely stackable into a transport container (17), **characterised in that** the transport line further comprises a transport apparatus (1) according to one of the claims 1 to 10.

## Revendications

1. Dispositif (1) de transport d'emballages non librement empilables, en particulier de stick packs, ou sachets sticks, depuis un dispositif de fabrication d'emballages (7) vers un conteneur de transport (17) dans une station pour emballage de transport (16) avec système de compactage simultané des emballages, dans lequel les emballages sont fabriqués par une machine (7) comportant au moins deux canaux de descente (8) qui sont espacés l'un de l'autre de façon régulière ou sensiblement régulière par un entraxe P, le dispositif comprenant les éléments suivants :
- un premier élément de transport (2) comprenant au moins un groupe de compartiments (3) destinés à recevoir les emballages délivrés par le dispositif de fabrication d'emballages (7) et destiné au transport des emballages en direction de la station pour emballage de transport (16) ;
- une unité de transfert (9) destinée au transfert des emballages du dispositif de fabrication d'emballages (7) vers le groupe de compartiments (3), au moins au nombre de un, du premier élément de transport (2) et destinée à l'empilement dans le groupe de compartiments ;
- un second élément de transport (13) comprenant au moins un groupe de compartiments (12) et destiné au transport des emballages vers la station pour emballage de transport (16),
- les compartiments (4, 11, 11') des groupes de compartiments (3, 12) du premier et du second éléments de transport ayant chacun une largeur égale ou sensiblement égale à la largeur des emballages,
**caractérisé en ce que**
- le groupe de compartiments (3) du premier élément de transport (2) comporte au moins *f* compartiments (4) et f correspond au nombre F des canaux de descente (8) ou à un multiple de celui-ci,
- l'entraxe X des compartiments (4) du premier élément de transport (2) correspond à l'entraxe P des canaux de descente (X = P) ou y correspond sensiblement,
- l'entraxe Y des compartiments (11, 11') du second élément de transport (13) correspond au demi-entraxe P des canaux de descente (Y = P/2) ou y correspond sensiblement, et
- le dispositif comprend en outre une seconde unité de transfert (18) destinée au transfert des emballages du premier élément de transport (2) vers le second élément de transport (13),
- un moyen de positionnement (10) étant associé au dispositif pour le positionnement du groupe de compartiments (3) du premier élément de transport (2) par rapport au groupe de compartiments (12) du second élément de transport (13).

2. Dispositif selon la revendication 1, **caractérisé en ce que** le groupe de compartiments (12) du second élément de transport (13) comporte au moins 2*f* compartiments (11, 11').

3. Dispositif selon la revendication 1 ou 2, **caractérisé en ce que** le second élément de transport (13) est conçu sous forme de chaîne d'alvéoles pour produits.

4. Dispositif selon la revendication 1 ou 2, **caractérisé en ce que** le groupe de compartiments (12), au moins au nombre de un, du second élément de transport (13) est conçu sous forme de cassette.

5. Dispositif selon l'une des revendications 1 à 4, **caractérisé en ce que** le groupe de compartiments (3), au moins au nombre de un, du premier élément de transport (2) est conçu sous forme de cassette.

6. Dispositif selon la revendication 4 ou 5, **caractérisé en ce que** le moyen de positionnement (10) est conçu sous forme de butée mobile pour la cassette.

7. Dispositif selon la revendication 5 ou 6, **caractérisé en ce que** le dispositif comprend en outre un élément de transport de retour (15) destiné au transport des cassettes vidées depuis la seconde unité de transfert (18) vers la première unité de transfert (9).

8. Dispositif selon l'une des revendications 1 à 7, **caractérisé en ce que** le premier élément de transport (2) est subdivisé en deux sections d'élément de transport qui présentent chacune leur propre entraînement.

9. Dispositif selon l'une des revendications 1 à 8, **caractérisé en ce que** le moyen de positionnement (10) est formé par le premier élément de transport (2).

10. Dispositif selon l'une des revendications 1 à 9, **caractérisé en ce que** les compartiments (4, 11, 11') sont formés par des parois de séparation (19), les parois de séparation (19) des compartiments (4, 11, 11') d'au moins l'un des groupes de compartiments (3, 12) d'au moins l'un des éléments de transport (2, 13) présentant une surface structurée.

11. Procédé de transport d'emballages non librement empilables depuis un dispositif de fabrication d'emballages (7), qui présente au moins deux canaux de descente (8) espacés l'un de l'autre de façon régulière ou sensiblement régulière par un entraxe P, vers un conteneur de transport (17) dans une station pour emballage de transport (16) avec système de compactage des emballages, comprenant les étapes suivantes :
- transfert des emballages en provenance du dispositif de fabrication d'emballages (7) dans un groupe de compartiments (3) d'un premier élément de transport (2) présentant au moins *f* compartiments (4) d'une largeur égale ou sensiblement égale à la largeur des emballages, *f* correspondant au nombre F des canaux de descente (8) ou à un multiple de celui-ci, et l'entraxe X des compartiments (4) du premier élément de transport (2) correspondant à l'entraxe P des canaux de descente ou y correspondant sensiblement (X = P), de façon à former dans F compartiments du groupe de compartiments respectivement une pile d'au moins un emballage ;
- déplacement du premier élément de transport vers une seconde unité de transfert ;
- positionnement du groupe de compartiments (3) du premier élément de transport (2) par rapport à un groupe de compartiments (12) d'un second élément de transport (13) présentant au moins 2f compartiments (11) d'une largeur égale ou sensiblement égale à la largeur des emballages, l'entraxe Y des compartiments (11) du second élément de transport correspondant au demi-entraxe P des canaux de descente (8) (Y = P/2) ou y correspondant sensiblement, de façon telle que chaque compartiment (4) du groupe de compartiments (3) est associé à un n-ième (n = 1, 3, 5, ... r) compartiment (11) d'un groupe de 2*f* compartiments ;
- transfert des piles de chaque compartiment (4) du groupe de compartiments du premier élément de transport (2) transversalement à la direction de transport vers le groupe de compartiments (12) du second élément de transport (13), de façon à remplir tout d'abord chaque n-ième compartiment (11) d'un groupe de 2*f* compartiments ;
- déplacement d'un autre groupe de compartiments (3) du premier élément de transport (2) vers la seconde unité de transfert (18) et positionnement du groupe de compartiments (3) du premier élément de transport (2) de façon que chaque (n+1)ième compartiment (11') libre du groupe soit associé à un compartiment (4) du groupe de compartiments (3) du premier élément de transport (2) ;
- transfert des piles constituées d'au moins deux emballages de chaque compartiment (4) du groupe de compartiments (3) du premier élément de transport (2) transversalement à la direction de transport vers chaque (n+1)ième compartiment (11') du groupe G du groupe de compartiments (3) du second élément de transport (2), et
- transport du groupe G vers une station pour emballage de transport (16).

12. Procédé selon la revendication 11, **caractérisé en ce qu'**au niveau de la station pour emballage de transport (16), au moins une pile des piles d'emballages se trouvant dans les compartiments (11, 11') du groupe G est transférée dans un conteneur de transport (17).

13. Procédé selon la revendication 11 ou 12, **caractérisé en ce que** le second élément de transport (13) est à l'arrêt pendant le transfert des emballages présents dans la seconde unité de transfert (18) vers le second élément de transport et/ou pendant le transfert des emballages vers le conteneur de transport (17).

14. Ligne de transport d'emballages non librement empilables, en particulier de stick packs, ou sachets sticks, comprenant un dispositif de fabrication d'emballages (7) destiné à la fabrication d'emballages non librement empilables, une station pour emballage de transport (16) destinée à un nouvel emballage des emballages non librement empilables dans un conteneur de transport, **caractérisée en ce que** la ligne de transport comprend en outre un dispositif de transport (1) selon l'une des revendications 1 à 10.
